# DEMANDE DE BREVET EUROPEEN

(11) **EP 2 757 486 A1**
(43) Date de publication de la demande: **23.07.2014**
(21) Numéro de dépôt: 14151816.7
(22) Date de dépôt: 20.01.2014
(51) Int. Cl.: G06F 13/42

(54) **Interface de réseau sur puce dotée d'un système adaptatif de déclenchement d'envoi de données**

(30) Priorité: 21.01.2013 FR 1350520
(71) Demandeur: Commissariat à l'Énergie Atomique et aux Énergies Alternatives, 75015 Paris (FR)
(72) Inventeur: Lemaire, Romain, 38170 Seyssinet-Pariset (FR); Clermidy, Fabien, 38120 Saint-Egreve (FR)
(74) Mandataire: Ilgart, Jean-Christophe

(57) **Abrégé**

L'invention concerne une interface réseau (130a, 130b) pour ressource (A) de réseau sur puce dotée d'un contrôleur de communication comprenant des moyens de mémorisation et prévu pour émettre des données vers une autre interface réseau lorsqu'une quantité de données présentes dans les moyens de mémorisation atteint un seuil prédéterminé (X_{sed}), le contrôleur de communication, comprenant en outre des moyens (S₁₀, 164a, 162b, 172b) pour forcer une émission de données présentes dans lesdits moyens de mémorisation lorsque ces données sont en quantité inférieure au seuil prédéterminé (X_{sed}).

## Description

### DOMAINE TECHNIQUE

La présente invention concerne le domaine des systèmes sur puce ou SoC *(System on Chip)* mettant en oeuvre un réseau sur puce ou NoC *(Network on Chip),* et plus particulièrement celui des interfaces réseau dans un réseau sur puce.

Elle prévoit une interface réseau améliorée, permettant de limiter la latence dans un réseau sur puce.

### ART ANTÉRIEUR

Pour répondre aux besoins d'applications telles que du décodage vidéo haute-résolution ou de la transmission de données sans-fil haut-débit, il est connu de mettre en oeuvre des architectures de réseau sur puce dites « hétérogènes », c'est à dire composées d'éléments de traitement encore appelés ressources de natures différentes et qui peuvent être sous forme de processeur(s) de traitement, d'accélérateur(s) matériels, d'unité(s) reconfigurable(s), de mémoire(s).

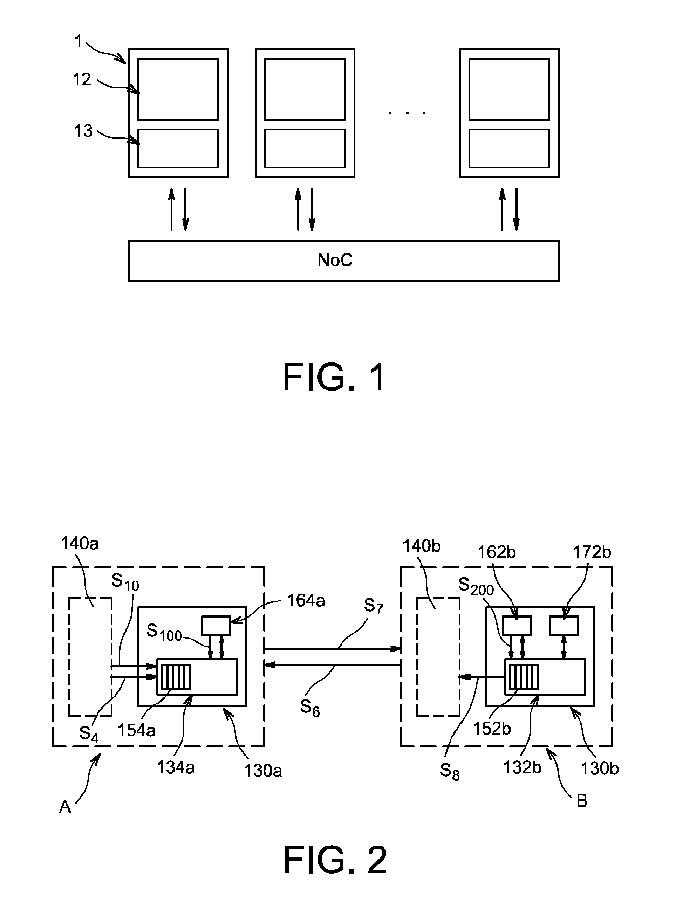

Une architecture de réseau sur puce ou NoC (NoC pour « network on Chip ») comprend une pluralité de ressources 1 aptes à communiquer entre elles et à s'échanger des données. Chaque ressource 1 de la structure de réseau comporte une partie ou des moyens que l'on appelle coeur fonctionnel ou unité de traitement 12, dédiée notamment aux traitements de données et/ou aux calculs, ainsi que des moyens ou une autre partie que l'on nomme interface réseau 13, et qui permet à la ressource 1 de communiquer avec le réseau (figure 1).

Les interfaces réseau 13 permettent de faire abstraction des communications au niveau des unités de traitement. Le rôle d'une interface réseau est de gérer localement les communications entrantes et sortantes de l'unité de traitement de sorte que, vu de cette dernière, tout se passe comme si les connexions avec les autres unités de traitement étaient de type point à point. Les interfaces réseau permettent de faire communiquer entre elles des unités de traitement de nature différentes. Un réseau sur puce utilise ainsi une couche d'interface permettant de gérer les communications entre les différents éléments ou ressources du réseau.

Les documents EP 1°641°197 A1 et EP 1°835°411 A1 divulguent des architectures de réseau sur puce suivant l'art antérieur, dans lesquelles des protocoles d'échanges de données permettent le transfert de messages sous forme de paquets de données.

Un paquet est formé d'un certain nombre de données associées à des informations de protocole telles que des informations concernant la provenance du paquet et/ou concernant la destination du paquet.

Il existe en particulier 2 types de données :
- les données à traiter envoyées par une ressource productrice de données à traiter et reçues par une ressource consommatrice de données qui est destinée à réaliser un traitement sur ces données ;
- les données de crédits envoyés par une ressource consommatrice de données à traiter, pour permettre d'indiquer à une ressource productrice de données à traiter que la ressource consommatrice est prête à recevoir des données à traiter.

Une interface réseau 13 comprend généralement un module contrôleur de communication d'entrée.

En fonction de la manière dont il est paramétré, ce module contrôleur de communication d'entrée permet notamment à la ressource de transmettre des crédits à d'autres ressources du réseau.

Une première ressource, lorsqu'elle est destinée à recevoir des données à traiter ou à transmettre des données qui proviennent d'une seconde ressource, envoie préalablement des crédits vers la seconde ressource pour signifier à cette dernière qu'elle est autorisée à envoyer lesdites données à traiter ou à transmettre. Le nombre de crédits envoyés par la première ressource pourra permettre d'indiquer à la seconde ressource, la quantité de données que cette seconde ressource est autorisée à envoyer vers la première ressource. Ce nombre de crédits dépend de la place libre dont la première ressource dispose en entrée, ainsi que de la quantité de données que la première ressource est censée recevoir de la part de la seconde ressource. Une fois qu'elle est autorisée à émettre grâce à la réception de crédits, la seconde ressource est susceptible d'émettre autant de données que le nombre de crédits envoyés par la première ressource le lui permet.

Ainsi, l'envoi de crédits de la première ressource vers la seconde ressource permet l'ouverture d'un chemin pour des données provenant de la seconde ressource et destinées à la première ressource. Ce mécanisme d'envoi de crédits permet d'assurer qu'une donnée émise par la seconde ressource peut être réceptionnée par la première ressource.

Une interface réseau comprend en outre un module contrôleur de communication de sortie. Ce module contrôleur de communication de sortie est associé à un ou plusieurs moyens de stockage en sortie d'où transiteront des données sortantes de la ressource. Ces moyens de stockage peuvent se présenter sous forme d'une ou plusieurs unités FIFO, ou d'une ou plusieurs mémoires dont le module contrôleur d'informations sortantes pourra connaître le taux de remplissage et les adresses libres. Le module contrôleur de communication de sortie peut être prévu notamment pour, en fonction de la manière dont il est paramétré, créer des paquets de données à transmettre vers une ou plusieurs autres ressources réceptrices.

Pour réduire le surcout en bande-passante lié aux informations de protocole, on cherche généralement à réduire le nombre de paquets transmis par une interface réseau d'une ressource à une autre interface réseau d'une autre ressource du réseau, et à augmenter la taille des paquets.

Ainsi, plusieurs données à traiter ou crédits sont regroupés dans un même paquet. Cependant, cela peut avoir pour effet d'introduire une latence importante.

Si une interface réseau attend qu'un nombre important de données soit disponible pour envoyer un nouveau paquet, le transfert de données produites en premier ainsi que leur traitement, peuvent être fortement retardés.

Ainsi, on cherche généralement un compromis entre réaliser un envoi données/crédits par unité afin d'obtenir une latence faible mais avec l'inconvénient de créer un trafic réseau important, et réaliser un regroupement de crédits/données en paquets ce qui réduit le trafic mais accroit la latence et les temps de traitements.

Ce compromis est généralement obtenu en tenant compte du nombre de noeuds de routage figurant entre une ressource émettrice de données et une ressource réceptrice de données, mais également de la taille de mémoires de type FIFO, prévues au niveau des contrôleurs de communication des interfaces réseau afin de temporiser le flux des données entre le réseau et les unités de traitement.

Des paramètres de communication tels que la taille des paquets de données, le seuil d'envoi de crédits, peuvent être définis en fonction du NoC et du SoC concerné.

Ces paramètres peuvent être fournis aux contrôleurs de communication par le biais de configurations ou programmations contenant par exemple également des paramètres de routage. Ces paramètres sont généralement établis de manière fixe sur toute la durée d'utilisation d'un lien de communication entre interfaces réseau.

Il se pose le problème de mettre en oeuvre une interface réseau améliorée dans un réseau sur puce qui ne présente pas les inconvénients évoqués ci-dessus.

### EXPOSÉ DE L'INVENTION

La présente invention concerne tout d'abord une interface réseau pour ressource de système sur puce adaptée à interfacer une unité de traitement de données de ladite ressource avec un réseau du système sur puce, l'interface réseau étant dotée d'un contrôleur de communication d'entrée comprenant :
- des moyens d'émission de crédits,
- des moyens de réception de données à traiter,
   l'interface réseau étant dotée en outre d'un contrôleur de communication de sortie comprenant :
   - des moyens de réception de données de crédits,
   - des moyens d'émission de données à traiter, au moins un contrôleur de communication donné parmi lesdits contrôleurs de communication d'entrée et de sortie de ladite interface étant doté en outre de moyens de mémorisation et étant adapté pour émettre des données vers une autre interface réseau lorsqu'une quantité de données présentes dans les moyens de mémorisation atteint un seuil prédéterminé, le contrôleur de communication, comprenant en outre des moyens pour forcer une émission de données ou de crédits présent(e)s dans lesdits moyens de mémorisation lorsque ces données sont en quantité inférieure audit seuil prédéterminé.

Ainsi, selon l'invention, lorsque des à coups ou des interruptions apparaissent dans un flot de données, on peut adopter un mode de fonctionnement dans lequel l'envoi de données présentes dans une interface réseau est forcé, ce qui permet de réduire la latence et de permettre à nouveau d'adopter un mode de fonctionnement nominal.

Le contrôleur de communication donné peut être le contrôleur de communication de sortie.

Dans ce cas, les moyens pour forcer l'émission de données peuvent comprendre des moyens intégrés à l'unité de traitement de données pour émettre un signal de forçage d'envoi de données à traiter à destination du contrôleur de sortie.

Les moyens pour forcer l'émission de données peuvent en outre, ou en variante, comprendre des moyens de déclenchement à retard pour déclencher une émission des données présentes dans ladite mémoire un intervalle de temps prédéterminé après leur arrivée dans ladite mémoire.

Selon une possibilité de mise en oeuvre de l'interface, le contrôleur de communication d'entrée peut être doté d'une mémoire et être adapté pour émettre des crédits vers une autre interface réseau lorsqu'une quantité de crédits présentes dans la mémoire atteint une consigne prédéterminée, le contrôleur de communication d'entrée comprenant des moyens de déclenchement à retard pour déclencher une émission des données de crédits présentes dans ladite mémoire un laps de temps prédéterminé après leur arrivée.

Selon une autre possibilité de mise en oeuvre de l'interface réseau, le contrôleur de communication d'entrée de ladite interface est doté d'une mémoire et est adapté pour émettre des crédits vers une autre interface réseau lorsqu'une quantité de données de crédits présents dans la mémoire atteint une consigne prédéterminée, le contrôleur de communication d'entrée comprenant en outre des moyens de calcul de seuil dynamique d'envoi de crédits, lesdits moyens étant dotés de moyens de comptage de la taille de paquets de données reçues par le contrôleur de communication d'entrée modulo ladite consigne prédéterminée, lesdits moyens de calcul de seuil dynamique étant adaptés pour forcer un envoi de paquet de crédits de taille inférieure à ladite consigne lorsque lesdits moyens de comptage ont comptabilisé un paquet de données de taille inférieure à ladite consigne.

La présente invention concerne également un système sur puce comprenant plusieurs ressources reliées à un réseau sur puce par des interfaces réseau dédiées, une interface réseau étant adaptée à interfacer une unité de traitement de données d'une ressource avec le réseau sur puce, le système comprenant des moyens d'établissement d'une communication entre une première et une deuxième ressource via respectivement des première et deuxième interfaces réseau associées, dans lequel la première interface réseau est dotée d'un contrôleur de communication de sortie comprenant :
- des moyens de réception de crédits aptes à recevoir des crédits en provenance de la deuxième interface réseau, et
- des moyens d'émission de données, aptes à envoyer à la deuxième ressource, par le réseau, des données disponibles délivrées par la première ressource, sous réserve d'une réception préalable d'un nombre suffisant de crédits, et
   dans lequel la deuxième interface réseau est dotée d'un contrôleur de communication d'entrée comprenant :
   - des moyens d'émission de crédits, aptes à envoyer des crédits disponibles à la première ressource du réseau, par le réseau, et
   - des moyens de réception de données, aptes à recevoir des données en provenance de la première ressource du réseau et à destination de la deuxième ressource, et
   dans lequel au moins un contrôleur de communication est adapté pour émettre des données ou des crédits lorsqu'une quantité de données ou de crédits disponibles atteint un seuil prédéterminé, et caractérisé en ce que ledit au moins un contrôleur de communication comprend en outre des moyens pour forcer une émission de données ou de crédits disponibles lorsque leur nombre est inférieur audit seuil prédéterminé.

Le contrôleur de communication de sortie peut comprendre une mémoire pour stocker les données disponibles produites par la première ressource.

Avantageusement, des moyens pour forcer l'émission de données disponibles présentes dans ladite mémoire après réception d'un signal de forçage d'envoi de données peuvent être prévus.

Le contrôleur de communication d'entrée peut comprendre une mémoire de réception pour stocker les données reçues, et un registre indiquant le nombre de crédits disponibles, le nombre de crédits disponibles correspondant aux places libres dans la mémoire de réception moins le nombre de crédits déjà émis pour ces places libres.

Avantageusement, des moyens pour forcer l'émission de crédits disponibles après réception d'un signal de forçage d'envoi de crédits peuvent être prévus.

Une unité de traitement de données associée à une interface réseau peut être prévue de manière à émettre à un signal de forçage d'envoi de données à destination du contrôleur de communication de sortie de l'interface réseau associée.

Une unité de traitement de données associée à une interface réseau peut être configurée de manière à émettre à un signal de forçage ou d'envoi de crédits à destination du contrôleur de communication d'entrée de l'interface réseau associée.

Avantageusement, des moyens de suivi du temps de présence de données disponibles dans un contrôleur de communication de sortie et des moyens d'émission d'un signal de forçage d'envoi de données à destination du contrôleur de communication de sortie de l'interface réseau associée si le temps de présence de données disponibles est supérieur à un seuil prédéfini peuvent être également prévus.

Selon un possibilité de mise en oeuvre, des moyens de suivi du temps de présence de crédits disponibles respectivement dans un contrôleur de communication d'entrée et des moyens d'émission d'un signal de forçage d'envoi de crédits à destination du contrôleur de communication d'entrée de l'interface réseau associée si le temps de présence de crédits disponibles dans la mémoire ou le registre est supérieur à un seuil prédéfini.

Le contrôleur de communication d'entrée de la deuxième interface peut être adapté pour émettre des crédits lorsqu'une quantité de crédits disponibles atteint un seuil prédéterminé, le contrôleur de communication d'entrée comprenant en outre des moyens de calcul de seuil dynamique d'envoi de crédits, comprenant un compteur du nombre de données reçues par le contrôleur de communication d'entrée modulo ledit seuil prédéterminé, lesdits moyens pour forcer l'envoi de crédits utilisant ce seuil dynamique pour décider de forcer l'envoi de crédits quand le nombre de crédits disponibles atteint ce seuil, le nombre de crédits envoyés étant alors égal au seuil dynamique.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 illustre un réseau sur puce NoC suivant l'art antérieur,
- la figure 2 illustre un échange de données entre deux interfaces réseau selon un mode de mise en oeuvre de l'invention,
- la figure 3 illustre un mécanisme de forçage d'envoi de données par une interface réseau selon un mode de réalisation de l'invention,
- les figures 4A et 4B illustrent respectivement un exemple de dispositif adaptatif de déclenchement d'envoi de données et un exemple de dispositif adaptatif de déclenchement d'envoi de crédits.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Un exemple d'échange entre une première interface réseau 130a d'une première ressource A et une deuxième interface réseau 130b d'une deuxième ressource B, reliées à un réseau sur puce NoC est illustré sur la figure 2.

Les interfaces réseaux 130a, 130b, comportent chacune un contrôleur de communication d'entrée 132 (qui n'est pas représenté pour la première interface 130a) et un contrôleur de communication de sortie 134 (non représenté pour la deuxième interface 130b).

Des données à transmettre S₄, provenant d'une unité de traitement 140a de la première ressource A, et sous forme d'un flot de données, sont reçues par le contrôleur de communication de sortie 134a de la première interface réseau 130a et transmises à destination du contrôleur de communication d'entrée 132b de la deuxième interface réseau 130b qui restitue alors un flot de données S₈ à une unité de traitement 140b de la deuxième ressource B.

Le contrôleur de communication de sortie 134a de la première interface réseau 130a, transmet des données S₇ au contrôleur de communication d'entrée 132b de la deuxième interface réseau 130b, lorsqu'au préalable le contrôleur de communication d'entrée 132b de la deuxième interface réseau 130b a transmis des crédits S₆ au contrôleur de communication de sortie 134a de la première interface réseau 130a autorisant l'envoi de données et indiquant à la première ressource A la quantité de données qu'elle est autorisée à émettre, le nombre de données pouvant être émises étant égal au nombre de crédits reçus par le contrôleur de communication de sortie 134a.

Des données produites par l'unité de traitement 140a de la première ressource A sont stockées dans une mémoire 154a, par exemple de type FIFO, associée ou intégrée au contrôleur de communication de sortie 134a de la première ressource A.

Dans un mode de fonctionnement normal ou nominal, lorsque le nombre de données disponibles stockées dans cette mémoire 154a atteint un seuil X_{sed} dit « seuil d'envoi », l'envoi des données de cette mémoire FIFO 154a sous forme d'un paquet est déclenché, et les données présentes dans cette mémoire sont transmises à la deuxième interface réseau 130b. Ce seuil d'envoi X_{sed} peut avoir été fixé par le biais d'une programmation encore appelée « configuration ».

Lorsque la production de données par l'unité de traitement 140a n'est pas régulière et/ou qu'elle n'est pas adaptée à l'envoi de paquets de taille fixe, des données peuvent être éventuellement disponibles dans la mémoire FIFO 154a sans que, pour autant, ledit seuil d'envoi X_{sed} n'ait été atteint.

Le dispositif suivant l'invention peut ainsi adopter un autre mode de fonctionnement et être adapté pour débloquer des données disponibles situées dans un contrôleur de communication de sortie d'une interface réseau.

Pour cela, un forçage d'envoi de données peut être réalisé.

Selon une première réalisation, un signal dit « de forçage d'envoi » S₁₀ produit par l'unité de traitement 140a et reçu par le contrôleur de communication de sortie 134a permet de déclencher l'envoi des données présentes dans la mémoire 154a, indépendamment du seuil d'envoi X_{sed}.

La décision de l'émission du signal S₁₀ de forçage est prise en interne par l'unité de traitement et peut déprendre de l'application à laquelle le système sur puce est soumis. Par exemple, pour une application du système sur puce à un traitement d'image, l'unité de traitement d'une ressource peut considérer une taille d'image, ou un nombre de pixels par ligne d'image pour prendre cette décision d'émission du signal de forçage.

L'unité de traitement peut connaitre la manière dont les données sont produites et peut ainsi détenir une estimation des moments de fin de phases de production de données et donc des moments favorables au déclenchement de l'envoi de paquets de données.

Ainsi, même si le nombre de données présentes dans la mémoire 154a est inférieur audit seuil d'envoi X_{sed}, la réception par l'interface de communication de sortie 134a du signal « de forçage d'envoi » S₁₀ permet de déclencher la transmission des données de la mémoire 154a vers la deuxième interface réseau 132b, dès lors que le nombre de crédits à disposition de la première interface est suffisant.

De façon générale, les données produites par la ressource A et stockées temporairement dans la mémoire 154a sont envoyées automatiquement par paquets de X_{sed} données, au fil de la production, un envoi étant réalisé chaque fois que le nombre de données disponibles stockées atteint X_{sed} données.

Lorsque l'unité de traitement 140a productrice de données émet le signal S₁₀ de forçage d'envoi, les données présentes dans la mémoire FIFO 154a en quantité inférieure à la taille d'un paquet, sont envoyées sous forme d'un paquet de données plus petit, dont le nombre de données est inférieur au seuil X_{sed}. L'envoi continu de paquets de X_{sed} données ou l'envoi d'un paquet de plus petite taille suite à la réception d'un signal de forçage d'envoi S₁₀ est conditionné à la réception préalable par l'interface réseau 130a d'un nombre suffisant de crédits. En l'absence de tels crédits, il est possible que des données s'accumulent dans la mémoire 154a.

Par exemple, dans un cas où la mémoire FIFO 154a reçoit 18 données et qu'un signal S₁₀ de forçage d'envoi est déclenché, avec un seuil X_{sed} d'envoi de données fixé à 8, le contrôleur de communication de sortie envoie 2 paquets de 8 données puis un paquet complémentaire de 2 données ayant ainsi une taille inférieure à celle du seuil d'envoi X_{sed}.

Un mode de réalisation consiste à déclencher le signal S₁₀ lorsqu'un traitement est fini.

Un autre mode réalisation consiste à définir des phases de traitement à la fin desquelles le signal S₁₀ est émis.

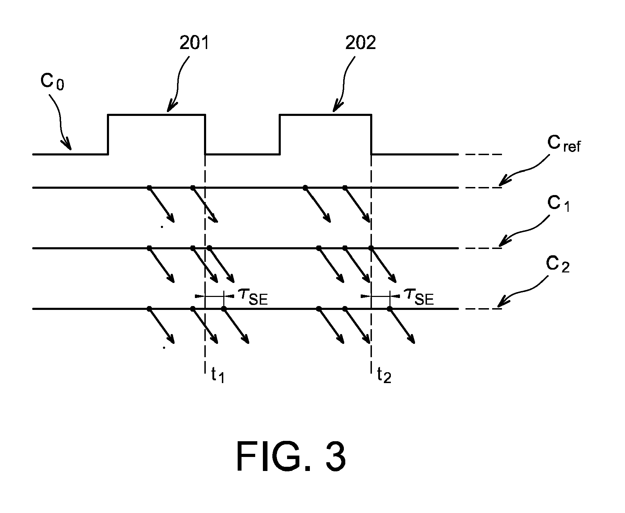

La Figure 3 illustre un exemple de mécanisme d'émission de données dans lequel la production de 18 données correspond à une granularité de calcul connue par l'unité de traitement. Dans cet exemple, le signal s₁₀ est ainsi généré après chaque bloc de 18 données.

Pour forcer un envoi de données, un dispositif de déclenchement à retard 164a peut être également prévu dans l'interface réseau 130a.

Ce dispositif fonctionne comme une minuterie et permet de forcer l'envoi d'un paquet de données, lorsque des données sont restées disponibles dans la mémoire FIFO 154a pendant un laps de temps supérieur à un seuil prédéterminé, et ce même lorsque le nombre de données disponibles est inférieur à la consigne X_{sed}, dès lors que le nombre de crédits à disposition de la première ressource est suffisant. Ce laps de temps peut être également adapté en fonction de l'application à laquelle le système sur puce est soumis.

Sur la figure 3, les deux mécanismes de forçage d'envoi de données qui viennent d'être décrits sont illustrés. Le chronogramme C₀ représente un profil de production de deux groupes 201, 202 consécutifs de 18 données par l'unité de traitement 140a.

En mode de fonctionnement normal illustré par le chronogramme C_{ref}, des données figurant dans la mémoire 154a sont émises par exemple par paquets de 8 données lorsque X_{sed} est fixé à 8. A un instant t₁ correspondant à la fin du groupe de données 201, deux paquets de 8 données ont déjà été transmis, tandis que 2 données sont en attente. Ces données en attente du premier groupe 201 sont ensuite envoyées de manière retardée avec les six premières données du deuxième groupe 202 suivant. Ainsi, à l'instant t₂ de fin d'arrivée des données du deuxième groupe 202, quatre données disponibles, non émises, sont en attente dans la mémoire 154a.

Selon le premier mode de fonctionnement d'envoi forcé de données illustré par le chronogramme C₁, aux instants t₁ et t₂, le signal S₁₀ de forçage d'envoi déclenche l'envoi de paquets de 2 données vers la deuxième interface réseau 130b.

Selon le deuxième mode de fonctionnement d'envoi forcé de données illustré par le chronogramme C₂, à des instants t₁ + -τ_{sed}, et t₂ + τ_{sed}, le dispositif de déclenchement à retard provoque l'envoi de paquets de 2 données vers la deuxième interface réseau 130b.

Ainsi, pour ces deux modes de réalisation, aucune donnée n'est stockée dans la mémoire 154a en attente d'un autre groupe futur de données.

Une mise en oeuvre avec le signal S₁₀ de forçage permet un gain en termes de rapidité de traitement, tandis qu'un dispositif de déclenchement à retard 164a peut être adapté à tout type d'unité de traitement. Ces deux modes de fonctionnement peuvent être utilisés notamment lorsque le profil de production de données issues de l'unité de traitement 140a n'est pas nécessairement connu et peut éventuellement être amené à varier au cours du temps. En outre, même dans le cas où le profil de production est connu mais discontinu et présente une production de groupes de données qui ne contiennent pas un multiple entier de X_{sed}, ces modes de fonctionnement permettent d'éviter des stockages longs et inutiles de données avant leur envoi.

Le contrôleur de communication 130a illustré sur la figure 3 est doté de deux moyens différents de forçage d'émission de données, mais un seul de ces moyens ou d'autres moyens de forçage peuvent être utilisés. De façon générale, le contrôleur de communication de sortie comprend un dispositif de réception d'un signal de forçage d'envoi de données provenant de la ressource associée ou d'un autre dispositif du circuit, de préférence un dispositif local associé situé par exemple dans l'interface réseau, et de préférence autonome, c'est à dire capable de produire le signal de forçage d'envoi par analyse de l'activité de la ressource et/ou de l'interface réseau.

Le contrôleur de communication d'entrée 132b de la deuxième interface réseau 130b, est destiné à émettre des crédits. L'envoi de crédits peut se faire par le biais d'un seuil conforme à une configuration de gestion de crédits utilisée par le contrôleur de communication d'entrée 132b.

Le nombre de crédits disponibles correspond au nombre de places physiquement libres dans une mémoire 152b du contrôleur de communication d'entrée 132b auquel on retranche un nombre de crédits déjà envoyés. Les places libres correspondent aux places de la mémoire non occupées par des données déjà reçues à traiter par la ressource B.

Dans un mode de fonctionnement normal, lorsque le nombre de crédits disponibles atteint un seuil Y_{sec} dit « seuil d'envoi de crédits », qui peut correspondre à la taille prévue pour un paquet de crédits, l'envoi des crédits sous forme d'un paquet est déclenché. Ce seuil Y_{sec} d'envoi de crédits peut être adapté en fonction du seuil d'envoi de données X_{sed} et avantageusement choisi égal à X_{sed}.

Dans la mesure où, comme cela a été décrit précédemment, on peut faire varier la taille des paquets de données transmis par une ressource émettrice A vers une ressource réceptrice B, il s'avère également utile de faire varier en conséquence la taille des paquets de crédits transmis par la ressource B vers la ressource A afin que la ressource émettrice A dispose d'un maximum de crédits et de préférence d'un nombre optimal de crédits au moins égal à X_{sed} ou un multiple de X_{sed}.

De façon générale, le contrôleur de communication d'entrée comprend alors un dispositif de réception d'un signal de forçage d'envoi de crédits, pouvant par exemple provenir de la ressource associée.

Pour forcer l'envoi de crédits, un dispositif de déclenchement à retard 162b peut être également prévu dans la deuxième interface réseau 130b et émettre un signal de forçage d'envoi de crédits S₂₀₀ au contrôleur de communication d'entrée, le dispositif de déclenchement à retard 162b détecte que des crédits disponibles n'ont pas été envoyés après un laps de temps τ'_{sec}. Ce laps de temps τ'_{sec} peut être défini par la configuration de l'interface réseau.

Ce dispositif peut avoir un fonctionnement du type de celui d'une minuterie et permet de forcer l'envoi de crédits, dès lors que des crédits sont restés disponibles dans une mémoire du contrôleur de communication d'entrée pendant un laps de temps supérieur à un seuil prédéterminé, et ce même lorsque le nombre de crédits disponibles est inférieur au seuil Y_{sec} d'envoi de crédits.

La deuxième interface réseau 130b peut également comporter des moyens de calcul de seuil dynamique 172b d'envoi de crédits. Ce seuil dynamique d'envoi de crédits peut être utilisé par le contrôleur d'envoi de crédits quand il reçoit un signal de forçage d'envoi de crédits.

Le nombre de données reçues par la deuxième interface est comptabilisé sur un compteur modulo le seuil Y_{sec}. Lorsque la taille des paquets de données reçues correspond au seuil d'origine Y_{sec}, ce compteur reste à zéro.

Dans ce cas, le seuil Y_{sec} d'envoi de crédits reste le seuil par défaut et la taille des paquets de crédits envoyés est celle définie par ce seuil Y_{sec}. Dans le cas où X_{sed}= Y_{sec}, le compteur modulo Y_{sec} reste à 0 tant que les paquets de données émises, puis reçues, ont une taille égale à X_{sed}.

Lorsque des paquets de données de taille inférieure au seuil Ysec sont reçus, la valeur du compteur n'est plus nulle et elle est utilisée comme seuil provisoire d'envoi de crédits. Après envoi des crédits, le compteur est réinitialisé à zéro et le seuil d'envoi de crédits redevient le seuil Y_{sec} défini par configuration. Dans le cas où X_{sed} = Y_{sec}, ce mécanisme permet, lors de la réception d'un paquet de données de taille inférieure à X_{sed}, par exemple X_{sed}/2, d'envoyer un nombre de crédits égal à X_{sed}/2 de façon à reconstituer le nombre de crédits disponibles dans la ressource émettrice égal à X_{sed} ou égal à un multiple de X_{sed}.

Si l'on considère de nouveau le chronogramme présenté précédemment en liaison avec la figure 3, et un seuil d'envoi des crédits Y_{sec} fixé à 8, en fonctionnement normal, la libération dans la mémoire 152b de 2 places n'entraîne pas d'émission de crédits.

Dans le cas présent, une fois que le nombre de places libérées dans la mémoire FIFO 152b atteint le nombre indiqué par le compteur de données reçues modulo Y_{sec}, le contrôleur de communication d'entrée déclenche l'envoi de nouveaux crédits, le nombre de nouveaux crédits étant égal au nombre indiqué par ce compteur.

L'envoi d'un nombre de crédits inférieur au seuil Ysec permet en pratique d'accélérer les envois de données par la première ressource A lors d'une prochaine phase de production de données par la ressource A.

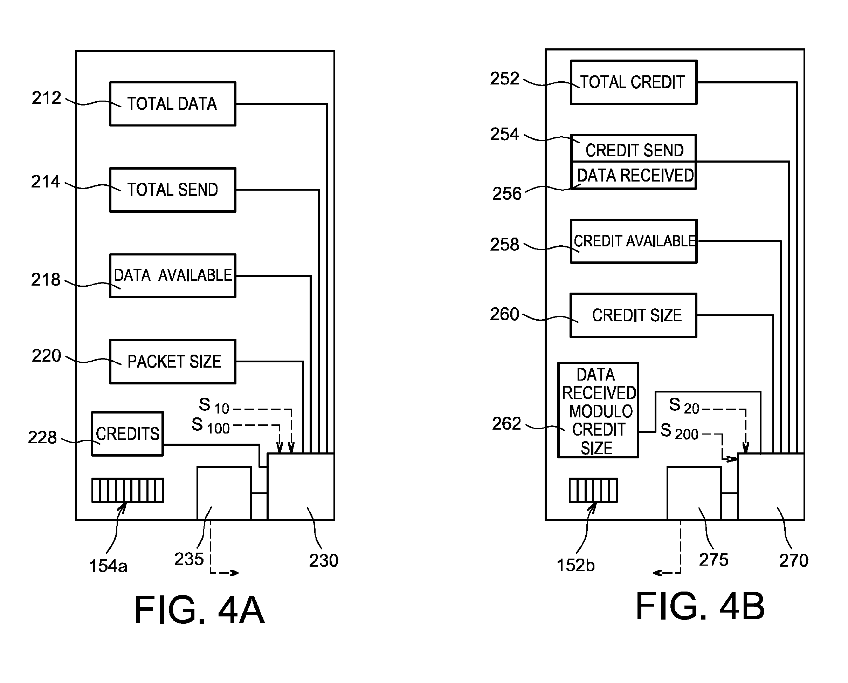

Un exemple de mise en oeuvre d'un dispositif de gestion d'envoi de données à traiter d'une interface réseau de la première ressource A destinée à émettre des données à traiter vers la deuxième ressource B, et dont un mode de fonctionnement a été décrit précédemment, est illustré sur la figure 4A.

Ce dispositif comprend un registre 212 indiquant un nombre total de données à traiter. Ce nombre total de données est établi par configuration, et a une valeur déterminée N fixe lorsque la communication entre la première ressource A et la deuxième ressource B est de type statique. En cas d'établissement d'une communication de type dynamique, le premier registre 212 peut être mis à une valeur particulière, par exemple tous ses bits à 0, pour permettre par exemple d'établir une distinction avec le cas d'une communication statique.

Une communication est dite statique ou dynamique selon respectivement que le nombre de données à échanger est connu ou inconnu lors de l'établissement de la communication.

Le dispositif comporte également un compteur 214 indiquant un nombre courant de données envoyées par la première ressource A depuis le début de la configuration, tandis qu'un registre 218 indique quant à lui un nombre courant de données disponibles à émettre stockées dans la mémoire 154a.

Un registre 220 indique quant à lui la taille des paquets de données, qui a été établie par configuration, et contient ainsi la valeur seuil X_{sed}.

Un registre 228 indique un nombre de crédits reçus non utilisés.

En fonction de l'état des registres et des compteurs 212, 214, 218, 220, 228, et d'une éventuelle réception du signal de forçage d'envoi de données, par exemple les signaux S₁₀ et S₁₀₀ précédemment décrits, des moyens de commande 230 d'envoi de données décident du déclenchement d'une émission de données à traiter à condition que le nombre de crédits reçus indiqué par le registre 228 soit suffisant.

Des moyens 235 de mise en forme des données peuvent être également prévus.

Les moyens de commande 230 associés aux registres et compteurs 212, 214, 218, 220, 228 peuvent être considérés comme équivalent à un contrôleur de sortie de données et permettent de remplir les fonctionnalités décrites ci-avant pour un tel contrôleur.

La figure 4B illustre un exemple correspondant de mise en oeuvre d'un dispositif de gestion d'envoi de crédits d'une interface réseau de la deuxième ressource B destinée à émettre des crédits vers la première ressource A, et dont le principe de fonctionnement a été décrit précédemment.

Ce dispositif comprend un registre 252 indiquant un nombre total de crédits à émettre, établi par configuration.

Ce nombre total de crédits est établi par configuration et prend une valeur déterminée fixe lorsque la communication entre la première ressource A et la deuxième ressource B est de type statique. En cas de communication dynamique, le registre 252 peut être mis à une valeur particulière, par exemple tous ses bits à 0, pour permettre d'établir une distinction avec le cas d'une communication statique et le cas échéant, de pouvoir détecter qu'une communication dynamique est établie.

Le dispositif comporte également un compteur 254 indiquant un nombre courant de crédits envoyés vers la première ressource, ainsi qu'un compteur 256 de données reçues en provenance de la première ressource.

Un compteur 258 indique quant à lui un nombre courant de crédits disponibles.

Ce compteur prend initialement une valeur correspondant au nombre de places disponibles dans une mémoire 152b réceptionnant les données, puis est incrémenté lorsque des données sont consommées par la deuxième ressource B, et décrémenté lorsque des crédits sont envoyés vers la première ressource A.

La taille des paquets de crédits établie par configuration correspondant à la valeur seuil Y_{sec} est indiquée par un registre 260.

Un compteur 262 peut être associé au registre 260 pour réaliser un comptage modulo Y_{sec} du nombre de données reçues et permettre d'indiquer un seuil dynamique provisoire d'envoi de crédits comme décrit précédemment.

En fonction de l'état des registres et compteurs 252, 254, 256, 258, 260, 262 et d'une éventuelle réception d'un signal de forçage d'envoi de crédits, par exemple les signaux S₂₀ et S₂₀₀ précédemment décrits, des moyens de commande 270 d'envoi de crédits déclenchent une émission de crédits, éventuellement après une mise en forme des données de crédits sous forme de paquets à l'aide d'un module 275.

Les moyens de commande 270 associés aux registres et compteurs 252, 254, 256, 258, 260, 262 peuvent être considérés comme équivalent à un contrôleur d'entrée de données et permettent de remplir les fonctionnalités décrites ci-avant pour un tel contrôleur.

Bien que non représentés, les interfaces réseau décrits précédemment peuvent comprendre des moyens de réinitialisation des registres, prévus pour effectuer une réinitialisation de registres notamment lors d'un changement de configuration et l'établissement d'une nouvelle communication.

En outre, un système sur puce suivant l'invention peut être prévu pour fonctionner selon plusieurs modes, en particulier adopter un mode dit « NORMAL » dans lequel le système a un fonctionnement classique d'envoi de données/crédits si un seuil de données/crédits disponibles est atteint, ou adopter un mode dit de « FORCAGE » c'est à dire fonctionnement du type suivant l'invention décrit précédemment avec une réception d'un signal de forçage d'envoi, dans lequel des données/crédits disponibles sont envoyées même si le nombre de données/crédits disponibles est inférieur audit seuil.

Un mode FORCAGE pourra par exemple être activé par les moyens de commande 230 ou 270 si ces derniers détectent que la communication établie est de type dynamique. Une fois le mode FORCAGE activé par les moyens de commande 230 ou 270, ces derniers peuvent mettre en oeuvre un procédé de gestion d'envoi forcé de données ou de crédits du type de ceux décrits dans les exemples précédemment décrits.

Dans le cas par exemple où les moyens de commande 230 incluent un microcontrôleur ou équivalent, ces derniers peuvent réaliser un suivi du temps de présence des données disponibles et décider de l'envoi forcé de données si le temps de présence dépasse une certaine durée.

## Revendications

1. Système sur puce comprenant plusieurs ressources reliées à un réseau sur puce par des interfaces réseau dédiées, une interface réseau (130a) étant adaptée à interfacer une unité de traitement de données d'une ressource avec le réseau sur puce, le système comprenant des moyens d'établissement d'une communication entre une première et une deuxième ressource via respectivement des première et deuxième interfaces réseau associées, dans lequel la première interface réseau est dotée d'un contrôleur de communication de sortie (134a) comprenant :
- des moyens de réception de crédits aptes à recevoir des crédits en provenance de la deuxième interface réseau, et
- des moyens d'émission de données, aptes à envoyer à la deuxième ressource, par le réseau, des données disponibles délivrées par la première ressource, sous réserve d'une réception préalable d'un nombre suffisant de crédits, et
dans lequel la deuxième interface réseau est dotée d'un contrôleur de communication d'entrée comprenant :
- des moyens d'émission de crédits, aptes à envoyer des crédits disponibles à la première ressource du réseau, par le réseau, et
- des moyens de réception de données, aptes à recevoir des données en provenance de la première ressource du réseau et à destination de la deuxième ressource, et
dans lequel au moins un contrôleur de communication (132b, 134a) est adapté pour émettre des données ou des crédits lorsqu'une quantité de données ou de crédits disponibles atteint un seuil prédéterminé (X_{sed}; Y_{sec}), et **caractérisé en ce que** ledit au moins un contrôleur de communication comprend en outre des moyens (S₁₀, 164a, 162b, 172b) pour forcer une émission de données ou de crédits disponibles lorsque leur nombre est inférieur audit seuil prédéterminé (X_{sed}; Y_{sec}).

2. Système sur puce selon la revendication 1, dans lequel le contrôleur de communication de sortie (134a) comprend une mémoire pour stocker les données disponibles produites par la première ressource.

3. Système sur puce selon la revendication 2, comprenant des moyens pour forcer l'émission de données disponibles présentes dans ladite mémoire après réception d'un signal de forçage d'envoi de données (S_{10;} S₁₀₀).

4. Système sur puce selon l'une des revendications précédentes, dans lequel le contrôleur de communication d'entrée comprend une mémoire de réception pour stocker les données reçues, et comprend un registre (152b) indiquant le nombre de crédits disponibles, le nombre de crédits disponibles correspondant aux places libres dans la mémoire de réception moins le nombre de crédits déjà émis pour ces places libres.

5. Système sur puce selon la revendication 4, comprenant des moyens pour forcer l'émission de crédits disponibles après réception d'un signal de forçage d'envoi de crédits (S₂₀ ; S₂₀₀).

6. Système sur puce selon la revendication 3, dans lequel une unité de traitement de données associée à une interface réseau est apte à émettre à un signal de forçage d'envoi de données (S₁₀) à destination du contrôleur de communication de sortie de l'interface réseau associée.

7. Système sur puce selon la revendication 4, dans lequel une unité de traitement de données associée à une interface réseau est apte à émettre à un signal de forçage ou d'envoi de crédits (S₂₀) à destination du contrôleur de communication d'entrée de l'interface réseau associée.

8. Système sur puce selon la revendication 2, comprenant des moyens de suivi du temps de présence de données disponibles dans un contrôleur de communication de sortie et des moyens d'émission d'un signal de forçage d'envoi de données à destination du contrôleur de communication de sortie de l'interface réseau associée si le temps de présence de données disponibles est supérieur à un seuil prédéfini.

9. Système sur puce selon la revendication 4, comprenant des moyens de suivi du temps de présence de crédits disponibles respectivement dans un contrôleur de communication d'entrée et des moyens d'émission d'un signal de forçage d'envoi de crédits à destination du contrôleur de communication d'entrée de l'interface réseau associée si le temps de présence de crédits disponibles dans la mémoire ou le registre est supérieur à un seuil prédéfini.

10. Système sur puce, selon l'une des revendications précédentes, dans lequel le contrôleur de communication d'entrée (132b) de la deuxième interface (130b) est adapté pour émettre des crédits lorsqu'une quantité de crédits disponibles atteint un seuil prédéterminé (Y_{sec}), le contrôleur de communication d'entrée (132b) comprenant en outre des moyens (172b) de calcul de seuil dynamique d'envoi de crédits, comprenant un compteur du nombre de données reçues par le contrôleur de communication d'entrée (132b) modulo ledit seuil prédéterminé, lesdits moyens pour forcer l'envoi de crédits utilisant ce seuil dynamique pour décider de forcer l'envoi de crédits quand le nombre de crédits disponibles atteint ce seuil, le nombre de crédits envoyés étant alors égal au seuil dynamique.
